# EUROPEAN PATENT APPLICATION

(11) **EP 2 905 265 A1**
(43) Date of publication of application: **12.08.2015**
(21) Application number: 14153965.0
(22) Date of filing: 05.02.2014
(51) Int. Cl.: C03B 29/12

(54) **Method and device for accelerating the speed of movement of a glass sheet on the air-support table of a heating furnace**

(71) Applicant: Glaston Services Ltd. Oy, 33730 Tampere (FI)
(72) Inventor: Keto, Kyösti, 37470 Vesilahti (FI)
(74) Representative: LEITZINGER OY

(57) **Abstract**

A method and device for accelerating the speed of movement of a glass sheet on the air-support table (1) of a heating furnace. The glass sheet is supported by means of the pressure of hot gas on the air-support table (1) and the edge of the glass (G) is supported on conveyor means (2). The angle of inclination of the air-support table is 1-20° with respect to the horizontal plane. The angle of inclination slants towards the edge of the glass supported by the conveyor means (2). The glass sheet is conveyed in the heating furnace by moving the conveyor means (2). The conveyor means (2) at the tail end (1b) of the air-support table (1) are moved at least momentarily faster than the conveyor means (2) at the forward end (1a), or the speed of movement of the conveyor means (2) is increased at least for some of the conveyor means (2) at the end of the heating stage. The pressure of the edge of the glass against the conveyor means (2) moved faster is increased by pressing the edge of the glass opposite to the conveyor means (2) with the pressing means (3), by means of which a force parallel to the plane of the glass is exerted on the glass sheet.

## Description

The invention relates to a method for accelerating the speed of movement of a glass sheet on the air-support table of a heating furnace, in which method
- the glass sheet is supported by means of the pressure of hot gas on the air-support table
- the edge of the glass is supported on conveyor means
- the angle of inclination of the air-support table is 1-20° with respect to the horizontal plane, the angle of inclination slanting towards the edge of the glass supported by the conveyor means, and
- the glass sheet is conveyed in the tempering furnace by moving the conveyor means.

The invention also relates to a device for accelerating the speed of movement of a glass sheet on the air-support table of a heating furnace, the device comprising
- an air-support table with an angle of inclination of 1-20° with respect to the horizontal plane, the air-support table having a forward end and a tail end, the conveying direction of the glass sheet being from the forward end to the tail end,
- conveyor means on the edge of the air-support table towards which the air-support table slants.

From the Applicant's publication EP 2343266 is known a method and device of the above type for supporting and heating glass sheets for tempering or bending. In both cases, the glass sheet must be heated to a temperature exceeding 600°C. The temperature of the gas cushion supporting the glass is then typically 600-700°C. Due to the air support, the speed of movement of the glass sheet in the heating furnace can be kept very low, whereby also the length of the heating furnace is kept short. However, in this case a problem arises from the glass sheet moving too slowly to the next tempering section or bending section. Even if the conveyor means, such as conveyor rolls, at the tail end of the heating furnace were rotated faster than those at the forward end or in the middle part, due to the small angle of inclination of the air-support table, the gravitational component of the glass against the surfaces of the conveyor rolls is so small that the speed of the glass accelerates very slowly to a higher speed (the conveyor rollers slipping with respect to the glass). Then again, it is useful to maintain the angle of inclination of the air-support table small, because the roller conveyor preceding the air-support table is horizontal and moving from a horizontal plane to an inclined plane is the more difficult the greater the angle of inclination.

The aim of the invention is to solve the above problem and to provide a method and device by means of which the speed of movement of a glass sheet on the air-support table of a heating furnace can be rapidly accelerated to the required transfer speed for transferring the glass sheet from the air-support table to the tempering section or bending section. In this way, harmful cooling of the glass sheet during transfer is avoided. High acceleration also means a short acceleration distance, that is, significant shortening of the length of the oven. Thus, the price of the oven falls and its space requirement is reduced.

This aim is achieved by means of the method according to the invention, on the basis of the characteristics disclosed in the accompanying claim 1. The aim is also achieved by means of the device according to the invention, on the basis of the characteristics disclosed in the accompanying claim 7. The dependent claims disclose preferred embodiments of the invention.

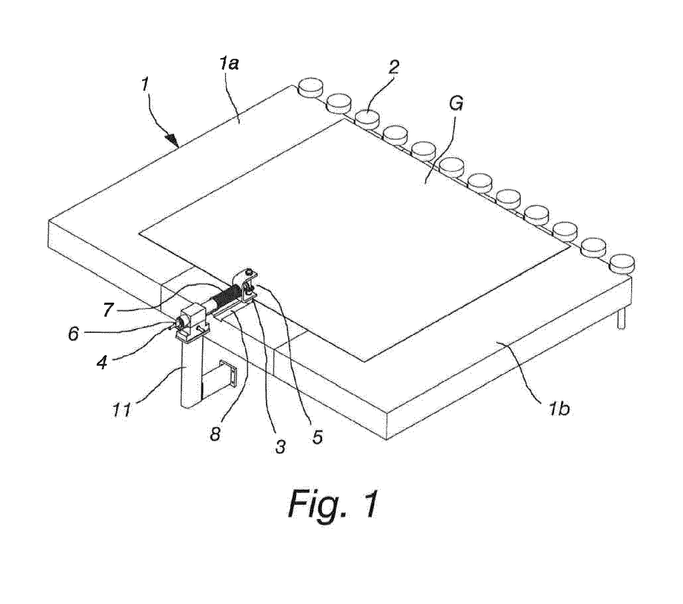

A preferred embodiment of the invention is described in greater detail in the following, with reference to the accompanying drawings in which
- Figure 1: shows the device for implementing the method according to the invention, as seen diagonally from above, and

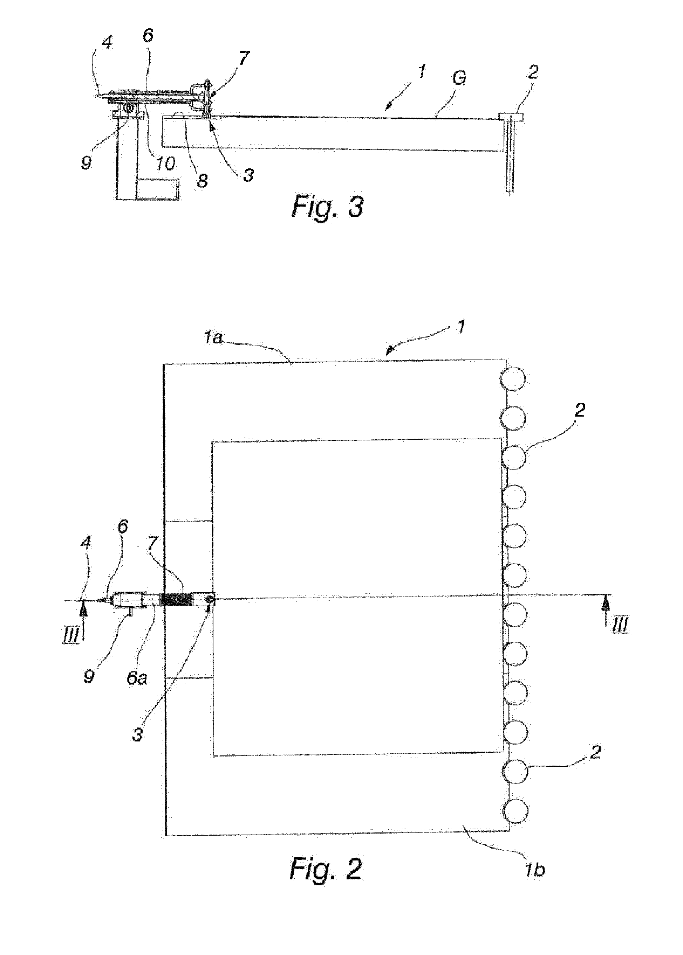

- Figures 2 and 3: show top and side views of the same device, and

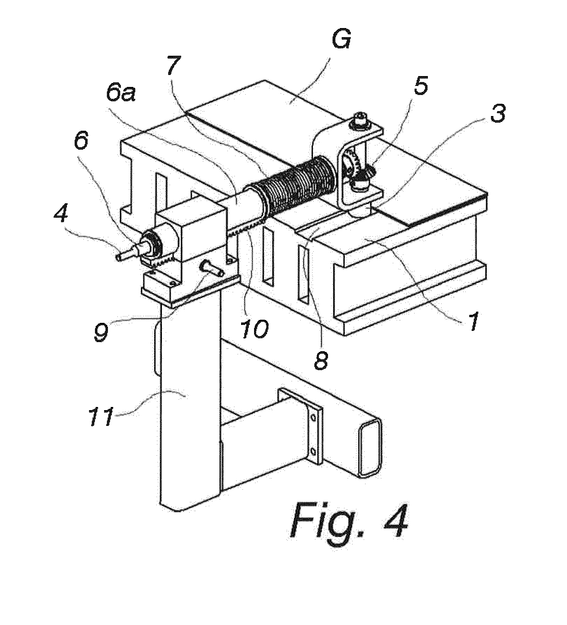

- Figure 4: shows on a larger scale in greater detail the essential parts of the device according to the invention, as seen diagonally from above.

The device disclosed comprises an air-support table 1, the angle of inclination of which is 1-20° with respect to the horizontal plane. The air-support table 1 has a forward end 1a and a tail end 1b. The glass sheet G is conveyed from the forward end of the air-support table to its tail end. On the edge of the air-support table towards which the air-support table slants are successively positioned conveyor rollers 2, the axes of rotation of which are transversely (preferably perpendicularly) to the plane of the air-support table 1. The glass sheet is conveyed on the air-support table by rotating the conveyor rollers 2. The circumferential speed of the conveyor rollers equals the speed of movement of the glass sheet in air support. Instead of the conveyor rollers can be also used other conveyor means, such as a conveyor chain or belt.

The glass sheet is conveyed very slowly at the forward end 1a and in the central area of the air-support table. At the tail end 1b of the air-support table, the speed of the glass sheet is accelerated to be sufficiently high for transfer to the conveyor of the following quenching section. The transfer speed required is typically equal to the speed of the conveyor of the quenching section. The transfer must be as rapid as possible in order for the glass sheet not to cool unnecessarily before quenching begins. The same applies to a situation in which a glass sheet is transferred from the heating furnace to bending.

The conveyor rollers 2 at the tail end 1b of the air-support table are rotated continuously or only at the acceleration stage with a higher speed than the conveyor rollers 2 at the forward end 1a. In the latter case, the conveyor rollers are accelerated from the speed of the conveyor rollers at the forward end to the transfer speed when the glass reaches the acceleration area (at the pressing means 3) and decelerated back to the speed of the rollers at the forward end once the glass has left for the tempering or bending section. The pressure of the glass sheet against the conveyor rollers rotated faster is increased by pressing the edge of the glass opposite to the conveyor rollers 2 with the pressing means 3, by means of which a force parallel to the plane of the glass is exerted on the glass sheet. In this case, momentary pressing suffices, in order for the contact of the pressing means 3 on the edge of the glass to be as brief as possible. As pressing time suffices the time required for accelerating the mass of the glass by means of the frictional forces of the conveyor rollers 2 and the pressing means 3. Alternatively (in the case of a short oven), all conveyor rollers are first rotated slowly and accelerated to transfer speed at the end of the heating stage.

In a preferred embodiment of the invention, the pressing means 3 is a pressing wheel provided with a rotating drive 4. In the embodiment shown, the rotating drive of the pressing wheel 3 is geared with bevel wheels 5, which are rotated with a drive shaft 6 parallel to the plane of the air-support table 1. In addition, the axis of rotation of the pressing wheel 3 is essentially perpendicular to the plane of the air-support table, whereby, on account of the bevel wheels, the axes of rotation of the pressing wheel and drive shaft may be at a 90 degree angle to each other. The end 4 of the drive shaft 6, to which the driving motor is connected, is located outside the furnace. Instead of bevel wheels, the pressing wheel 3 can be driven by a worm wheel, a trapezoid screw, belt, etc. Here, the drive shaft 6 is entered in the furnace through the wall, but it may also be led through the wall or ceiling.

The unit comprised of the pressing wheel 3 and the bevel wheels 5 driving it is supported on the drive shaft 6, which is in turn arranged to move parallel to its axis of rotation, that is, parallel to the plane of the glass sheet, against the load of the spring 7. Flexible pressing force is thus provided for the pressing wheel 3. In addition, the position of the pressing wheel 3 is arranged to be adjustable by adjusting means, which in the case disclosed comprise a toothed bar 10 secured to the bearing housing 6a of the shaft 6 and the drive shaft 9 of the toothed wheel connected to the toothed bar, by turning which drive shaft, the shaft 6 with its bearing housing 6a can be moved parallel to its shaft, that is, parallel to the plane of the glass sheet, back and forth with respect to the support 11. The toothed bar and the toothed wheel can be replaced, for example, by a worm wheel or a trapezoid screw with nuts.

Instead of a pressing wheel can be used other pressing means, such as a belt or chain. The wheel, belt or chain may be freely rotating or preferably provided with drive, that is, rotated with an actuator.

The air-support table 1 has a groove 8 transverse to the conveying direction of the glass sheet, into which groove the pressing means 3 is partly embedded and in which the pressing means is able to reciprocate.

As appears from the foregoing, in a preferred embodiment of the invention the pressing wheel 3 is a drive wheel and the pressing force generated by it is adjustable. The position of the pressing wheel is, in addition, adjustable for glass sheets of different width. Furthermore, a relatively short time suffices for pressing the edge of the glass, which means that the whole length of the edge of the glass does not have to be "mangled". As pressing force of the pressing wheel 3 at an acceleration of 0.25 m/s² suffices approximately 20% of the weight of the glass.

## Claims

1. A method for accelerating the speed of movement of a glass sheet on the air-support table (1) of a heating furnace, in which method
- the glass sheet (G) is supported by means of the pressure of hot gas on the air-support table (1)
- the edge of the glass (G) is supported on conveyor means (2)
- the angle of inclination of the air-support table (1) is 1-20° with respect to the horizontal plane, the angle of inclination slanting towards the edge of the glass (G) supported by the conveyor means (2), and
- the glass sheet (G) is conveyed in the heating furnace by moving the conveyor means (2), and
- the conveyor means (2) at the tail end (1b) of the air-support table (1) are moved at least momentarily faster than the conveyor means (2) at the forward end (1a), or the speed of movement of the conveyor means (2) is increased at least for some of the conveyor means (2) at the end of the heating stage,
**characterised in that** the pressure of the edge of the glass (G) against the conveyor means (2) moved faster is increased by pressing the edge of the glass opposite to the conveyor means (2) with the pressing means (3), by means of which a force parallel to the plane of the glass is exerted on the glass sheet (G).

2. A method as claimed in claim 1, **characterised in that** as conveyor means (2) are used successively positioned conveyor rollers, the circumferential speed of which equals the speed of movement of the glass (G) in air support.

3. A method as claimed in claim 1 or 2, **characterised in that** as pressing means (3) is used a pressing wheel (3) which is rotated by means of a rotating motor outside the furnace at the same time as the pressing wheel (3) is pressed against the edge of the glass.

4. A method as claimed in any of the claims 1 to 3, **characterised in that** the pressing means (3) is pressed against the edge of the glass (G) only briefly, that is, for the period of time required to accelerate the weight of the glass (G) to the desired transfer speed by means of the frictional forces of the conveyor means (2) and the pressing means (3).

5. A method as claimed in claim 3, **characterised in that** the pressing wheel (3), the axis of which is essentially perpendicular to the plane of the air-support table (1), is rotated by a shaft (6) parallel to the plane of the air-support table (1).

6. A method as claimed in any of the claims 1 to 5, **characterised in that** the pressing wheel (3) is pressed against the edge of the glass (G) by means of adjustable and flexible pressing force.

7. A device for accelerating the speed of movement of a glass sheet (G) on the air-support table (1) of a heating furnace, the device comprising
- an air-support table (1) with an angle of inclination of 1-20° with respect to the horizontal plane, the air-support table (1) having a forward end (1a) and a tail end (1b), the conveying direction of the glass sheet being from the forward end to the tail end,
- conveyor means (2) on the edge of the air-support table (1) towards which the air-support table (1) slants,
- the conveying speed of the conveyor means (2) at the tail end (1b) of the air-support table (1) being at least momentarily greater than the conveying speed of the conveyor means (2) at the forward end, or the conveying speed of at least the conveyor means (2) at the tail end of the air-support table (1) being greater at the end of the heating stage than at the beginning of the heating stage, **characterised in that** on the edge of the air-support table (1) which is higher and opposite the conveyor means (2), is a pressing means (3) which is arranged to exert a force parallel to the plane of the glass on the edge of the glass to press the glass sheet (G) against the conveyor means (2).

8. A device as claimed in claim 7, **characterised in that** as conveyor means (2) are successively positioned conveyor rollers, the circumferential speed of which equals the speed of movement of the glass (G) in air support.

9. A device as claimed in claim 7 or 8, **characterised in that** the pressing means (3) is a pressing wheel (3) provided with a rotating drive (4).

10. A device as claimed in claim 9, **characterised in that** the circumferential speed of the pressing wheel (3) is essentially equal to the conveying speed of the conveyor means (2) at the tail end of the air-support table (1).

11. A device as claimed in claim 9 or 10, **characterised in that** the axis of rotation of the pressing wheel (3) is essentially perpendicular to the plane of the air-support table (1) and the pressing wheel (3) is rotated with a drive shaft (6) parallel to the plane of the air-support table (1).

12. A device as claimed in any of the claims 7 to 11, **characterised in that** the pressing means (3) is loaded with a spring (7) which gives the pressing means (3) flexible pressing force.

13. A device as claimed in any of the claims 7 to 12, **characterised in that** the position of the pressing means (3) is adjustable by an adjusting means (9, 10).

14. A device as claimed in any of the claims 7 to 13, **characterised in that** the air-support table (1) has a groove (8) transverse to the conveying direction of the glass sheet (G), into which groove the pressing means (3) is partly embedded and in which the pressing means (3) is able to reciprocate.
